(19) **Europäisches Patentamt**

**European Patent Office**

**Office européen des brevets**

(11) Veröffentlichungsnummer: **0 016 317**
**B1**

(12) **EUROPÄISCHE PATENTSCHRIFT**

(45) Veröffentlichungstag der Patentschrift: **05.01.83**

(51) Int. Cl.³: **B 60 D 1/02, B 60 D 1/14**

(21) Anmeldenummer: **80100483.9**

(22) Anmeldetag: **31.01.80**

(54) **Höhenverstellbare Anhängerkupplung.**

(30) Priorität: **15.03.79 DE 2910164**

(43) Veröffentlichungstag der Anmeldung:
**01.10.80 Patentblatt 80/20**

(45) Bekanntmachung des Hinweises auf die Patenterteilung:
**05.01.83 Patentblatt 83/1**

(84) Benannte Vertragsstaaten:
**BE FR IT LU NL**

(56) Entgegenhaltungen:
**CH - A - 352 912**
**DE - A - 2 549 416**
**DE - B - 1 040 384**
**DE - B - 1 117 398**
**FR - A - 1 255 203**
**GB - A - 129 544**
**GB - A - 571 818**
**GB - A - 1 483 588**
**US - A - 1 566 831**
**US - A - 1 880 075**
**US - A - 3 400 949**
**US - A - 3 865 406**

(73) Patentinhaber: **Xaver Fendt & Co.**
**Postfach 140**
**D-8952 Marktoberdorf (DE)**

(72) Erfinder: **Müller, Hubert**
**Reichshofstrasse 29**
**D-8952 Marktoberdorf (DE)**

Courier Press, Leamington Spa, England.

## Höhenverstellbare Anhängerkupplung

Die Erfindung betrifft eine höhenverstellbare Anhängerkupplung nach dem Oberbegriff des Anspruches 1.

Bei einer durch die DE—B—1 117 398 bekannten Anhängerkupplung für ein Zugfahrzeug weist der das Kupplungsmaul tragende Tragbock mehrere Bohrungen auf, die den gleichen vertikalen Abstand besitzen, wie die Bohrungen in den Lochschienen. Zur Befestigung der Anhängerkupplung der gewünschten Höhe dienen zwei nach entsprechender Ausrichtung der Anhängerkupplung durch die Bohrungen hindurchgesteckte Steckbolzen.

Eine solche Befestigung für eine Anhängerkupplung ist insofern nachteilig, als zum Herausziehen der Steckbolzen der Bereich neben den Lochschienen gut zugänglich sein muß. Gerade in diesem Bereich befinden sich aber bei landwirtschaftlichen Schleppern mit einer Geräteanbauvorrichtung für Arbeitsgeräte die die unteren Lenker mit den Hubarmen des Krafthebers verbindenden Hubstreben. Bei ungünstiger Stellung der unteren Lenker kommt es oftmals vor, daß der Schlepperfahrer, um die Steckbolzen entfernen zu können, den Schlepper noch einmal besteigen muß, um die Geräteanbauvorrichtung mittels des Krafthebers zu verstellen. Bei der Größe der heutigen Schlepper ist dies, abgesehen von der dazu benötigten Zeit, dem Fahrer nicht zumutbar.

Recht schwierig gestaltet sich für eine einzelne Person auch das Verstellen der Anhängerkupplung, weil diese mit nur einer Hand in der richtigen Position gehalten werden muß, während mit der anderen Hand die Steckbolzen aus den Lochschienen zu nehmen bzw. in die Lochschienen zu stecken sind.

Eine in der Handhabung bereits bedeutend einfachere, allerdings am Anhänger selbst angebrachte Anhängerkupplung ist in der US—A—1 566 831 beschrieben. Der bei dem Gegenstand dieser Druckschrift anstelle des Kupplungsmaules vorgesehene dreieckförmige Rahmen mit einer Zugöse ist nach Lösen der Verriegelung mit dem Zugfahrzeug bequem höhenverstellbar. Jedoch stehen hierfür lediglich zwei verschiedene Höhen zur Verfügung, da der dreieckförmige Rahmen über in einer vertikalen Längsebene des Zugfahrzeuges verschwenkbare Lenker mit dem Fahrzeug verbunden ist.

Daneben weist diese bekannte Anhängerkupplung den Nachteil auf, daß der Zugang zur Arretier- bzw. Entriegelungseinrichtung durch den dreieckförmigen Rahmen sehr erschwert ist. Auch erfolgt das Verriegeln des Dreieckrahmens mit dem Zugfahrzeug nicht automatisch dann, wenn die hierfür vorgesehenen Bolzen mit den entsprechenden Bohrungen in den Lochschienen fluchten. Vielmehr ist die Bedienungsperson gezwungen den Dreieckrahmen zumindest in der oberen Stellung mit einer Hand in dieser Position zu halten, während mit der anderen Hand die Ent- bzw. Verriegelung vorgenommen wird.

Ausgehend von einer Merkmale beider bekannten Anhängerkupplungen aufweisenden, nicht real existierenden, vielmehr fiktiven Anhängerkupplung besteht die der Erfindung zugrunde liegende Aufgabe darin, eine höhenverstellbare Anhängerkupplung zu schaffen, die bei kompakter, leichter Bauweise dennoch eine hohe Stabilität aufweist und von der Bedienungsperson selbst einhändig bequem und unfallsicher verstellbar ist.

Gelöst wird diese Aufgabe durch die Kombination der kennzeichnenden Merkmale a) bis e).

Durch das Merkmal a) der erfinderischen Kombination ist eine Höhenverstellung der Anhängerkupplung ohne ein Verkanten mit der Folge eines erhöhten Kraftaufwandes durch die Bedienungsperson möglich. Durch das Merkmal b) ist die gesuchte neue Raststellung der Anhängerkupplung leichter auffindbar, da die Bolzen von selbst in die Bohrungen der Lochschienen einfallen können. Hierzu ist lediglich in der Nähe der gesuchten Position die Schwenkstellung des in seine die Bolzen zurückziehende Stellung geschwenkten Griffes ein wenig zurückzunehmen. Gleichzeitig bewirkt dieses Merkmal, daß im Falle eines unverhofften Entgleitens der Anhängerkupplung aus der hand der Bedienungsperson während des Verstellens die Anhängerkupplung nicht herunterfallen kann, sondern durch die in die Bohrungen der Lochschienen eindringenden Bolzen sofort abgefangen wird. Die Verwendung eines Kniehebels als Mechanismus zum Verschieben der Bolzen nach dem Merkmal c) erlaubt es in technisch einfachster Weise den zum Einleiten der Verschiebung der Bolzen benötigten Griff mit diesem Mechanismus zu verbinden. Gleichzeitig ergibt sich die Möglichkeit, den Griff, wie in Merkmal e) angegeben, zumindest annähernd oberhalb des Schwerpunktes der Anhängerkupplung anzuordnen, wodurch sichergestellt ist, daß die Bedienungsperson die Anhängerkupplung vor dem Entrasten ordnungsgemäß hält und daß beim vertikalen Verschieben der Anhängerkupplung die von der Bedienungsperson aufgewendete Kraft vollständig dem Verschiebevorgang zugute kommt. Auch das Merkmal d) trägt mit zur Lösung der gestellten Aufgabe bei, weil dadurch kein versehentliches Verschwenken des Griffes mit der Folge eines Verstellens der Anhängerkupplung möglich ist.

Weitere Einzelheiten der Erfindung sind in den Unteransprüchen gekennzeichnet. Die Erfindung wird im folgenden anhand einer Zeichnung näher beschrieben.

Es zeigt

Fig. 1 eine Seitenansicht der am Heck eines landwirtschaftlichen Schleppers befestigten Anhängerkupplung,

Fig. 2 eine Ansicht des in Fig. 1 gezeigten Heckbereiches eines Schleppers von oben,

Fig. 3 eine Ansicht des in Fig. 1 gezeigten Heckbereiches eines Schleppers nach der Linie A—B in Fig. 1,

Fig. 4 eine Ansicht der Halteplatte der Anhängerkupplung nach der Linie E—F in Fig. 5 und

Fig. 5 eine Ansicht der Halteplatte nach der Linie C—D in Fig. 4.

Die insgesamt mit 1 bezeichnete erfindungsgemäße Anhängerkupplung ist über Lochschienen 2, die mittels Schrauben 3 an das in den Zeichnungen nur andeutungsweise gezeigte Getriebegehäuse 4 angeschraubt sind, mit dem Schlepper verbunden. An den einander zugekehrten Seiten sind in Abstand vom Getriebegehäuse 4 in den Lochschienen 2 vertiakal verlaufende Schlitze 2a eingearbeitet, in denen die Anhängerkupplung 1 geführt ist. Die Breite der Lochschienen 2 in Richtung der Schlepperlängsachse ist so gewählt, daß die Anhängerkupplung 1 ohne Schwierigkeiten über die gesamte Länge der Lochschienen 2 verstellt werden kann, ohne mit der am Heck des Schleppers befindlichen Zapfwelle 5 zu kollidieren.

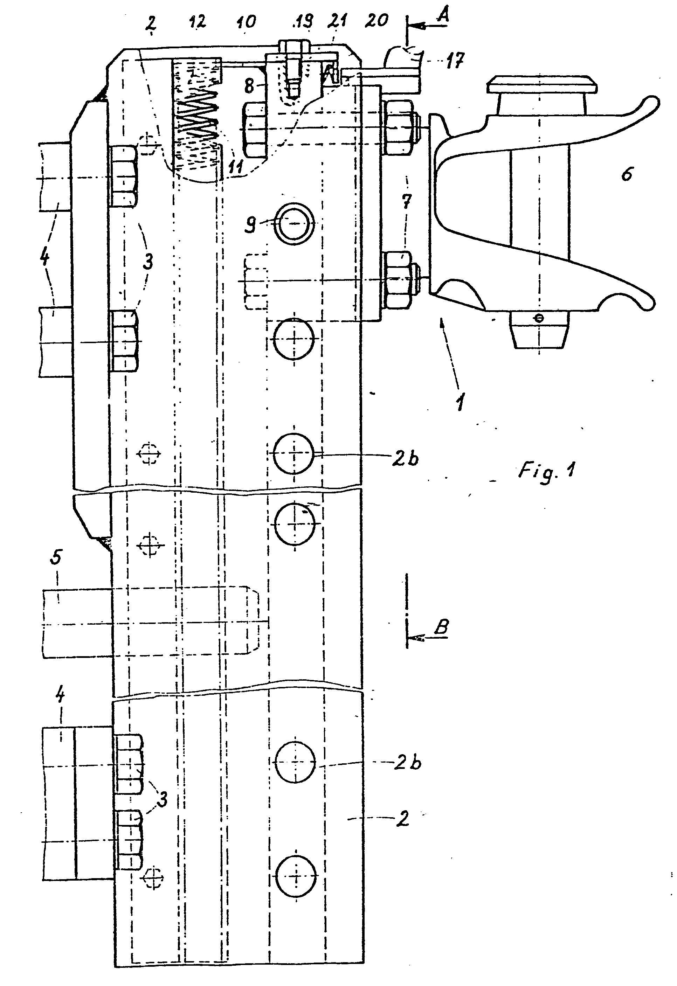

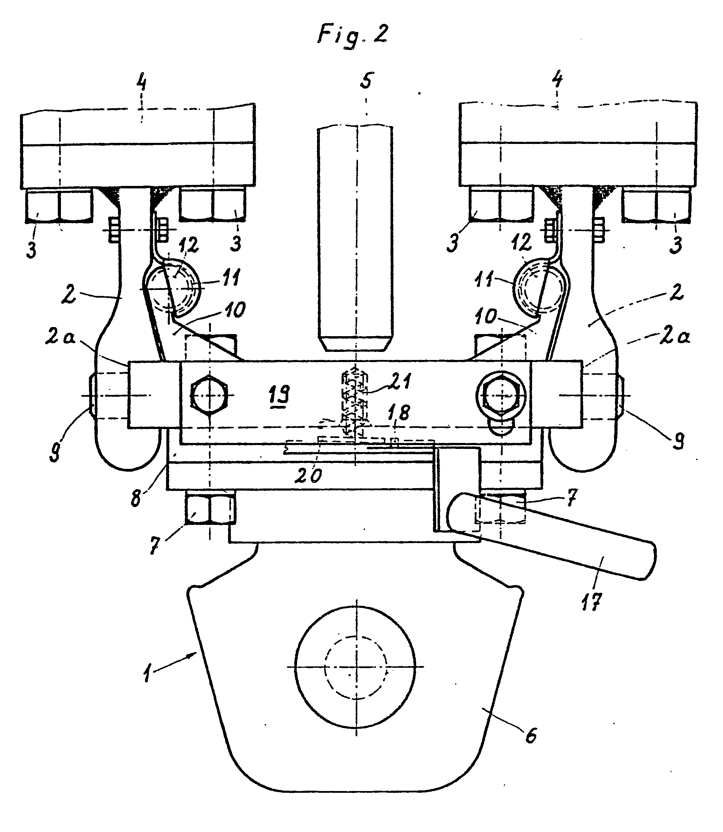

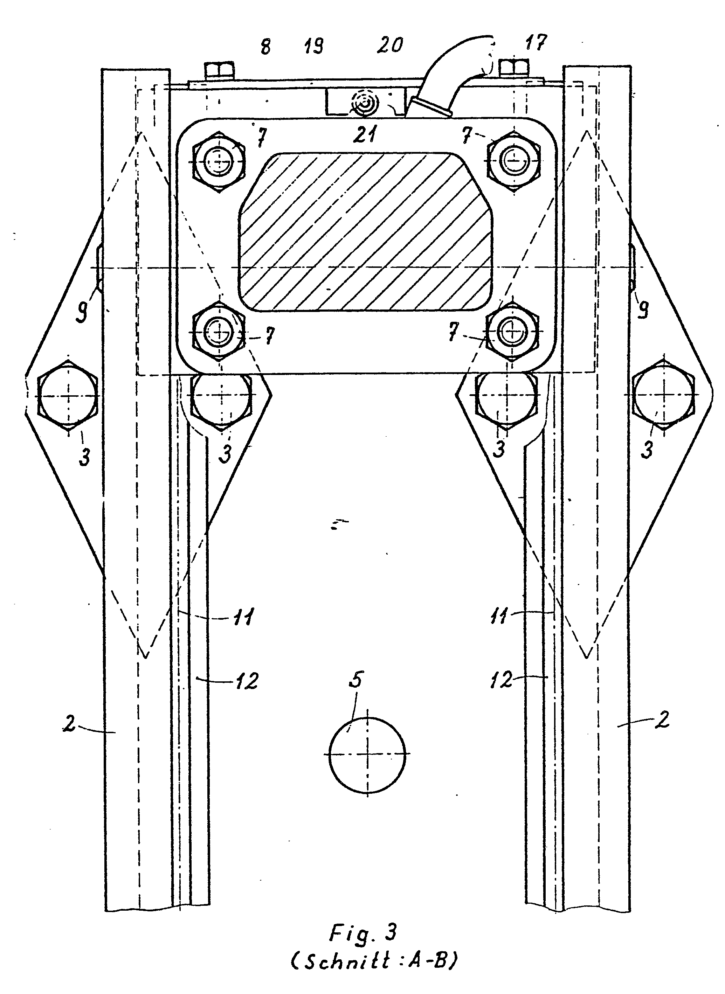

Die Anhängerkupplung 1 selbst besteht aus einem Kupplungsmaul 6 und einer mit diesem über Schrauben 7 verbundenen Tragplatte 8. Diese ist mit entsprechend bearbeiteten Seitenflächen in den Schlitzen 2a der Lochschienen 2 geführt. Zur Fixierung der Anhängerkupplung 1 in einer gewünschten Höhenlage befinden sich in der Tragplatte 8 zwei Bolzen 9, die mittels eines unten noch näher beschriebenen Mechanismus' aus der in den Fig. 1 bis 3 gezeigten Arretierstellung, in welcher sie durch die Bohrungen 2b in den Lochschienen 2 hindurchgreifen, in eine Verschiebestellung überführt werden können, in der sie vollständig in der Tragplatte 8 verschwinden. In dieser Verschiebestellung ist eine vertikale Verstellung der Anhängerkupplung 1 möglich.

Wegen des relativ großen Gewichtes der Anhängerkupplung 1 sind an der Rückseite der Anhängerkupplung 1 zwei passend geformte Laschen 10 befestigt, die fingerartig ausgebildet sind und mit ihren freien Enden auf je einer Druckfeder 11 aufliegen. Die Druckfedern 11 sind in schellenartig ausgebildeten Gehäusen 12 untergebracht, welche sich über die gesamte Länge der Lochschienen 2 erstrecken. In ihrer Federkennlinie sind sie so ausgelegt, daß die Anhängekupplung 1 ohne großen Kraftaufwand sowohl in die höchste als auch in die niedrigste Lage gebracht werden kann.

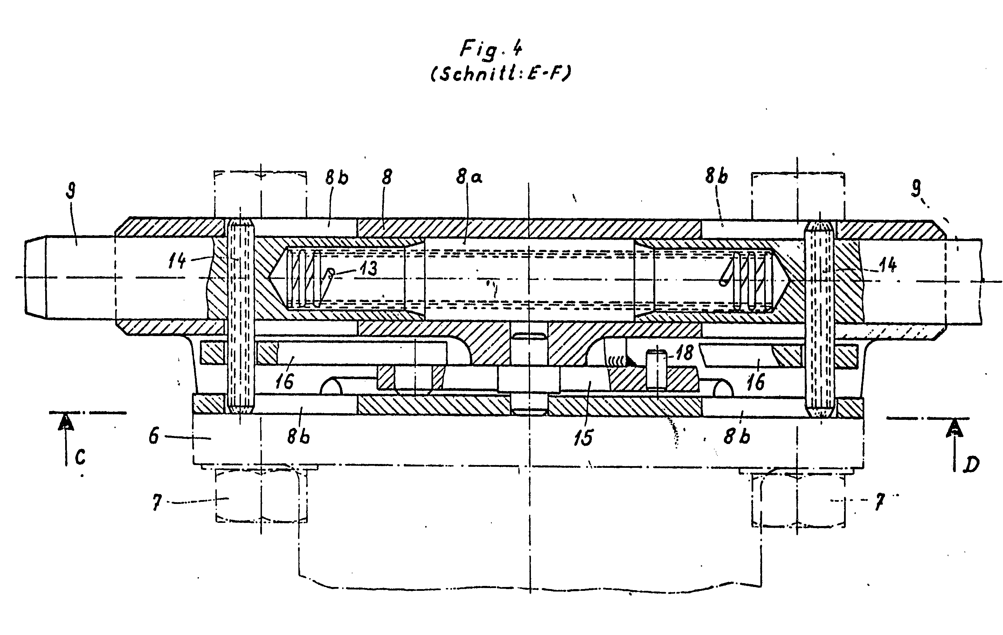

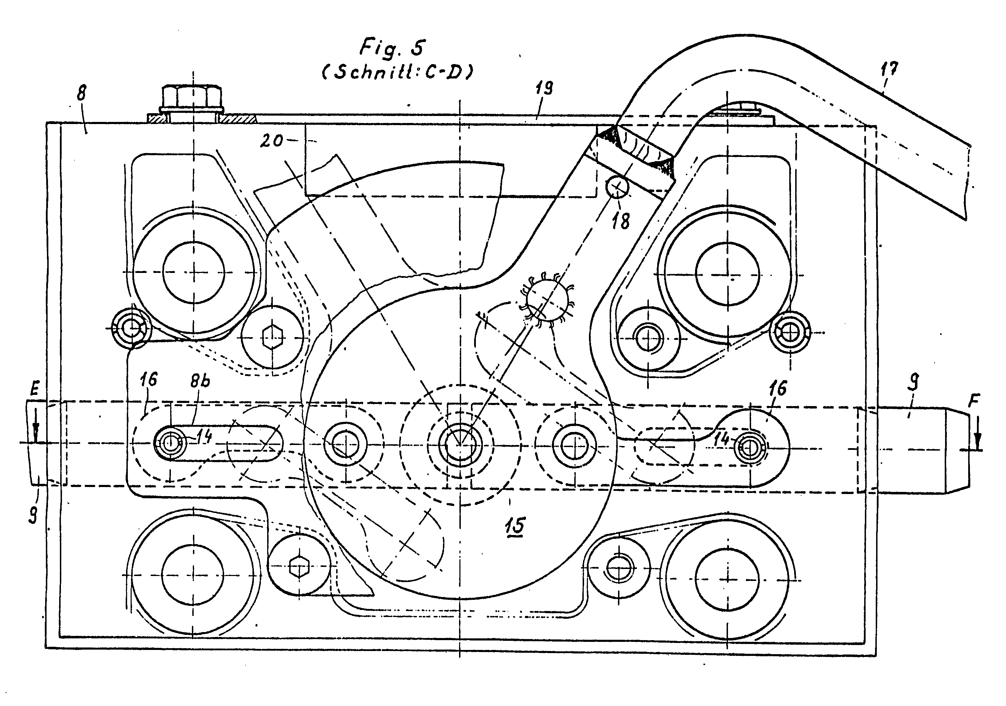

Der erwähnte Mechanismus zur Verstellung der Bolzen 9 ist in den Fig. 4 und 5 dargestellt. Danach sind beide Bolzen 9 in einer durchgehenden Bohrung 8a geführt, wobei sie unter der Kraft einer zwischen ihnen angeordneten Druckfeder 13 stehen, welche beide Bolzen 9 in ihre Arretierstellung zu drücken sucht.

Um die Bolzen 9 in die Verschiebestellung überführen zu können, ist in jeden der Bolzen 9 quer zu seiner Achse ein Querstift 14 eingesetzt, an den eine mit einem Schwenkteil 15 gelenkig verbundene Stange 16 angreift. Das Schwenkteil 15 und die Stangen 16 sind dabei in Art eines Kniehebels angeordnet, der sich in Strecklage befindet, wenn die Bolzen 9 ihre Arretierstellung einnehmen.

Damit die Bolzen 9 unter der Kraft der Druckfeder 13 z. B. bei Bruch einer Stange 16 nicht aus der Bohrung 8a herausgeschoben werden können, tauchen die Querstifte 14 außerdem in Langlöcher 8b der Tragplatte 8 ein und begrenzen so in der Arretierstellung die Bewegungsmöglichkeit der Bolzen 9.

Zum Verschwenken besitzt das Schwenkteil 15 einen oben aus der Tragplatte 8 austretenden Griff 17, der so geformt ist, daß bei in Verschiebestellung befindlichem Bolzen 9 (strichpunktierte Stellung) der Gesamtschwerpunkt der Anhängerkupplung 1 etwa senkrecht unter dem Griff 17 liegt. Damit das Schwenkteil 15 nicht unbeabsichtigt verstellt werden kann, ist in dieses ein Stift 18 eingesetzt, in dessen Bewegungsbahn eine an einem Schwenkblech 19 befestigte Lasche 20 befindet. An der Lasche 20 greift eine in eine Bohrung der Tragplatte 8 eingesetzte Druckfeder 21 an, die das Schwenkblech 19 in die Sperrstellung drückt. Vor jedem Schwenken des Schwenkteils 15 ist demnach zunächst das Schwenkblech 19 entgegen der Kraft der Druckfeder 21 aus der Bewegungsbahn des Stiftes 18 herauszubringen.

**Patentansprüche**

1. Höhenverstellbare Anhängerkupplung (1) für insbesondere landwirtschaftliche Schlepper, bestehend aus dem Kupplungsmaul (6) und einer mit dem Kupplungsmaul (6) fest verbundenen Tragplatte (8), die gegenüber zwei schlepperfesten Lochschienen (2) höhenverstellbar und in den verschiedenen Höhenlagen mittels Bolzen (9) arretierbar ist, die, miteinander fluchtend, unentnehmbar in der Tragplatte (8) geführt und durch Verschwenken eines Griffes (17) aus einer Arretierstellung, in der sie jeweils in eine der Bohrungen (26) einer Lochschiene (2) hineinragen, in eine Verschiebestellung, in der sie vollständig aus der Bohrung (2b) herausgezogen sind, verschiebbar sind, gekennzeichnet durch die Kombination folgender für sich bekannter Merkmale:

a) Die Tragplatte (8) ist in vertikalen Schlitzen (2a) der Lochschienen (2) verschiebbar geführt.

b) die Bolzen (9) sind gegen die Kraft einer zwischen ihnen angeordneten Druckfeder (13) aus der Arretierstellung in die Verschiebestellung schiebbar,

c) die Bolzen (9) sind mittels eines Kniehebels (Schwenkteil (15), Stange (16)) verschiebbar,

d) die Bolzen (9) sind durch einen sich unter dem Einfluß einer Druckfeder (21) in die Bewegungsbahn des Schwenkteils (15) liegenden Anschlages in der Arretierstellung blockiert und

e) der am Schwenkteil (15) befesitgte Griff (17) liegt zumindest annähernd oberhalb des Schwerpunktes der Anhängerkupplung.

2. Anhängerkupplung nach Anspruch 1 dadurch gekennzeichnet, daß die Bolzen (9) über in Langlöchern (8b) der Tragplatte (8) eintauchende Querstifte (14) mit den Stangen (16) des Kniehebels in Verbindung stehen.

3. Anhängerkupplung nach Anspruch 1 oder 2, dadurch gekennzeichnet, daß an vorzugsweise jeder der Lochschienen (2) in unmittelbarer Nähe der Tragplatte (8) ein parallel zum Schlitz (2a) verlaufendes Gehäuse (12) für eine Druckfeder (11) befestigt ist, auf der eine an der Tragplatte (8) befestigte lasche (10) aufliegt.

## Claims

1. Height-adjustable trailer coupling (1) for, in particular, agricultural tractors, comprising the coupling jaw (6) and a carrier-plate (8), which is rigidly attached to the coupling jaw (6), which can be vertically adjusted, relative to two perforated rails (2), these rails being immovably secured to the tractor, and which can be locked in the different vertical positions by means of bolts (9) which are guided in the carrier-plate (8), in alignment one with another and in a manner preventing removal, and which can be shifted by turning a handle (17), out of a locking position, in which they project, in each case, into one of the bores (2b) of a perforated rail (2), into a shifting position, in which they are completely withdrawn from the bore (2b), characterised by the combination of the following features, which are known per se:

a) The carrier-plate (8) is adjustably guided in vertical slots (2a) in the perforated rails (2),

b) the bolts (9) can be pushed, against the force of a compression spring (13), which is located between them, out of the locking position and into the shifting position,

c) the bolts (9) can be shifted by means of a toggle lever (pivoting part (15), bar (16)),

d) the bolts (9) are blocked, in the locking position, by a stop, which is subject to the action of a compression spring (21), and is positioned in the path on which the pivoting part (15) moves, and

e) the handle (17), which is fastened to the pivoting part (15), is located at least approximately above the centre of gravity of the trailer coupling.

2. Trailer coupling according to Claim 1, characterised in that the bolts (9) communicate with the bars (16) of the toggle lever via crosspins (14) which project into elongated holes (8b) in the carrier-plate (8).

3. Trailer coupling according to Claim 1 or 2, characterised in that a housing (12) for a compression spring (11) is secured to the perforated rail (2), preferably to each of these rails, in the immediate vicinity of the carrier-plate (8), this housing (12) running parallel to the slot (2a), a flat plate (10), which is secured to the carrier-plate (8), bearing against the compression spring (11).

## Revendications

1. Attelage de remoque (1) à hauteur réglable, en particulier pour tracteur agricole, constitué par une prise femelle (6) et une plaque porteuse (8) reliée solidairement avec cette prise, dont on peut régler la hauteur par rapport à deux rails perforés (2) fixés sur le tracteur, et qu'on peut bloquer à différentes hauteurs au moyen de chevilles (9) qui, alignées entre elles, sont guidées, sans pourvoir être retirées, dans la plaque porteuse (8) et que l'on peut déplacer, en faisant tourner une poignée (17), d'une position de blocage, dans laquelle elles pénètrent dans une des perforations (26) d'un rail perforé (2), vers une position de déplacement où elles sont complètement retirées des perforations (2b), attelage caractérisé par la combinaison des caractéristiques suivantes, connues en soi:

a) la plaque porteuse (8) est guidée, mobile dans des fentes verticales (2a) des rails perforés (2);

b) les chevilles (9) peuvent se déplacer de la position de blocage dans une position de déplacement contre la force d'un ressort de poussée (13) placé entre elles;

c) les chevilles (9) peuvent être déplacées au moyen d'un levier coudé (pièce tournante (15), tiges (16)),

d) les chevilles (9) peuvent être bloquées dans la position de blocage au moyen d'une butée qui se place sous l'effet d'un ressort de poussée (21) sur le parcours de la pièce tournante (15);

e) la poignée (17) fixée sur la pièce tournante (15) se situe au moins approximativement au dessus du centre de gravité de l'attelage de remorque.

2. Attelage de remorque suivant la revendication 1, caractérisé en ce que les chevilles (9) sont en liaison avec les bras (16) du levier coudé par l'intermédiaire de broches transversales (14) qui s'engagent dans des trous oblongs de la plaque porteuse (8).

3. Attelage de remorque suivant l'une des revendications 1 et 2, caractérisé en ce que, de préférence sur chacun des rails perforés (2), dans le voisinage immédiat de la plaque porteuse (8) est fixé un boîtier (12) s'étendant parallèlement à la fente (2a), destiné à un ressort de poussée (11) sur lequel s'appuie l'une des éclisses (10) fixées sur la plaque porteuse (8).

**0016317**

Fig. 1

Fig. 2

Fig. 3
(Schnitt : A-B)

Fig. 4
(Schnitt: E-F)

Fig. 5
(Schnitt: C-D)